# EUROPEAN PATENT APPLICATION

(11) **EP 4 659 843 A1**
(43) Date of publication of application: **10.12.2025**
(21) Application number: 24749717.5
(22) Date of filing: 31.01.2024
(51) Int. Cl.: B01D 53/78, B01D 53/18, B01D 53/62, B01D 53/75

(54) **ABSORPTION TOWER FOR GAS CAPTURE**

(30) Priority: 31.01.2023 CN 202310048049
(71) Applicant: Huaneng Clean Energy Research Institute, Beijing 102209 (CN)
(72) Inventor: LIU, Hanming, Beijing 102209 (CN); WANG, Huanjun, Beijing 102209 (CN); ZHANG, Yuanxue, Beijing 102209 (CN); GUO, Dongfang, Beijing 102209 (CN); NIU, Hongwei, Beijing 102209 (CN); LIU, Lianbo, Beijing 102209 (CN)
(74) Representative: advotec.
(86) International application number: PCT/CN2024/075005
(87) International publication number: WO 2024/160238

(57) **Abstract**

The absorption tower comprises an absorption tower body, a reaction chamber, a first conveying assembly and a second conveying assembly, a cavity is formed in the absorption tower body, a gas inlet, a gas outlet, a liquid inlet and a liquid outlet are formed in the absorption tower body, the cavity comprises the reaction chamber, the liquid inlet and the gas outlet are located above the reaction chamber, and the first conveying assembly and the second conveying assembly are arranged in the cavity. The gas inlet and the liquid outlet are located below the reaction chambers, the reaction chambers comprise a first reaction chamber, a second reaction chamber and a third reaction chamber, the gas inlet is communicated with the first reaction chamber, the liquid inlet is communicated with the first reaction chamber, the gas outlet and the liquid outlet are communicated with the third reaction chamber, the first conveying assembly is connected with the first reaction chamber, and the second conveying assembly is connected with the second reaction chamber. The first conveying assembly is connected with the second reaction chamber, the second conveying assembly is connected with the second reaction chamber, and the second conveying assembly is connected with the third reaction chamber. The absorption tower for gas trapping disclosed by the embodiment of the invention has the advantages of wide application range and good trapping effect.

## Description

### CROSS-REFERENCE TO RELATED APPLICATIONS

This application is based upon and claims priority to Chinese Patent Application No. 2023100480493, filed in China on January 31, 2023, the entire contents of which are incorporated herein by reference.

### TECHNICAL FIELD

The present disclosure relates to the field of absorption tower technology, and more particularly to an absorption tower for gas capturing.

### BACKGROUND

A chemical absorption gas capturing system includes three main parts: an absorption unit, a lean-rich liquid heat exchange unit and a desorption unit. The absorption unit is mainly an absorption tower, and an absorption section and a water washing section are in a tower body. For example, during a carbon dioxide absorption process, a solution enters from an upper portion of the absorption section of the absorption tower and flows from top to bottom. A carbon dioxide-containing gas enters inside the absorption tower from a bottom of the absorption tower and rises evenly to a packing area. The liquid and gas react in a convective contact, thereby achieving an absorption of the carbon dioxide.

In the related art, the absorption tower is arranged in a stacked manner to ensure that the gas is fully reacted or absorbed in the absorption tower, but the stacked arrangement will cause the absorption tower to be relatively high (a height will exceed 40 meters), which is not beneficial to scenarios with height limits, such as installations on buildings or ships.

### SUMMARY

Embodiments of the present disclosure aims to solve one of the technical problems existing in the related art to at least some extent.

To this end, embodiments of the present disclosure provide an absorption tower for gas capturing, a height of which is much lower than that of an absorption tower in the related art, and the absorption tower is convenient for use in ships and buildings.

The absorption tower for gas capturing according to embodiments of the present disclosure includes:
an absorption tower body, in which a compartment is defined in the absorption tower body, an air inlet, an air outlet, a liquid inlet and a liquid discharge port are provided at the absorption tower body, the compartment includes a reaction chamber located at an intermediate position in a height direction of the absorption tower body, the liquid inlet and the air outlet are located above the reaction chamber, and the air inlet and the liquid discharge port are located below the reaction chamber,
in which the reaction chamber includes a first reaction chamber, a second reaction chamber and a third reaction chamber which are arranged at intervals in a first direction, the first direction is orthogonal to the height direction of the absorption tower body, the air inlet is communicated with the first reaction chamber, the second reaction chamber and the third reaction chamber so that a flue gas is introduced into the first reaction chamber, the second reaction chamber and the third reaction chamber respectively, the liquid inlet is communicated with the first reaction chamber so that a reaction liquid is introduced into the first reaction chamber, the air outlet and the liquid discharge port are communicated with the third reaction chamber;
a first conveying assembly connected to a lower portion of the first reaction chamber, and connected to an upper portion of the second reaction chamber, for conveying a reaction liquid after the flue gas and the reaction liquid react in the first reaction chamber to the second reaction chamber, to facilitate a reaction of the reaction liquid after the reaction with the flue gas introduced into the second reaction chamber; and
a second conveying assembly connected to a lower portion of the second reaction chamber, and connected to an upper portion of the third reaction chamber, for conveying the reaction liquid after the reaction in the second reaction chamber to the third reaction chamber, to facilitate a reaction of the reaction liquid after the reaction with the flue gas introduced into the third reaction chamber;
a first cylinder and a second cylinder, in which the first cylinder is provided in the compartment, and the first reaction chamber is formed between a peripheral wall of the first cylinder and a peripheral wall of the absorption tower body,
in which the second cylinder is provided in a cavity of the first cylinder, the second reaction chamber is formed between a peripheral wall of the second cylinder and the peripheral wall of the first cylinder, and the third reaction chamber is formed by a cavity of the second cylinder.

The first reaction chamber, the second reaction chamber and the third reaction chamber in the absorption tower for gas capturing in embodiments of the present disclosure are arranged sequentially in the first direction, avoiding an overall height of the absorption tower being too high caused by a stacked installation, thereby facilitating a construction and use on the ships and in the buildings, and having a wide range of applications.

In some embodiments, projected contours of the first cylinder, the second cylinder and the absorption tower body in a plane orthogonal to the height direction of the absorption tower body are similar, and the projected contours of the first cylinder, the second cylinder and the absorption tower body in the plane orthogonal to the height direction of the absorption tower body are circular or regular polygonal.

In some embodiments, a projected area of the first reaction chamber in the plane orthogonal to the height direction of the absorption tower body is smaller than a projected area of the second reaction chamber in the plane orthogonal to the height direction of the absorption tower body,
the projected area of the second reaction chamber in the plane orthogonal to the height direction of the absorption tower body is smaller than a projected area of the third reaction chamber in the plane orthogonal to the height direction of the absorption tower body.

In some embodiments, each of the first reaction chamber and the second reaction chamber is communicated with each of the air outlet and the liquid discharge port.

In some embodiments, the first conveying assembly further includes a first pipeline, a first pump and a first heat exchanger, a first end of the first pipeline is connected to the first reaction chamber, a second end of the first pipeline is connected to the second reaction chamber, the first pump is provided on the first pipeline, and the first heat exchanger is provided between the first pump and the second end of the first pipeline.

The second conveying assembly further includes a second pipeline, a second pump and a second heat exchanger, a first end of the second pipeline is connected to the second reaction chamber, a second end of the second pipeline is connected to the third reaction chamber, the second pump is provided on the second pipeline, and the second heat exchanger is provided between the second pump and the second end of the second pipeline.

In some embodiments, the absorption tower for gas capturing further includes a first spray member, a second spray member and a third spray member. The first spray member is provided in the first reaction chamber and connected to a top wall of the first reaction chamber, and the first spray member is communicated with the liquid inlet.

The second spray member is provided in the second reaction chamber and connected to a top wall of the second reaction chamber, and the second spray member is communicated with the second end of the first pipeline.

The third spray member is provided in the third reaction chamber and connected to a top wall of the third reaction chamber, and the third spray member is communicated with the second end of the second pipeline.

In some embodiments, a plurality of first spray members, a plurality of second spray members and a plurality of third spray members are provided, the plurality of first spray members are arranged at intervals along a circumference of the first reaction chamber, the plurality of second spray members are arranged at intervals along a circumference of the second reaction chamber, and the plurality of third spray members are arranged at intervals along a circumference of the third reaction chamber.

In some embodiments, the absorption tower for gas capturing further includes a first vent pipe, a second vent pipe and a third vent pipe. A first end of the first vent pipe is provided on a bottom wall of the first reaction chamber and is communicated with the air inlet, and a second end of the first vent pipe extends in a direction away from the bottom wall of the first reaction chamber.

A first end of the second vent pipe is provided on a bottom wall of the second reaction chamber and is communicated with the air inlet, and a second end of the second vent pipe extends in a direction away from the bottom wall of the second reaction chamber.

A first end of the third vent pipe is provided on a bottom wall of the third reaction chamber and is communicated with the air inlet, and a second end of the third vent pipe extends in a direction away from the bottom wall of the third reaction chamber.

In some embodiments, the absorption tower for gas capturing further includes a first liquid outlet, a second liquid outlet and a third liquid outlet. The first liquid outlet is provided at the bottom wall of the first reaction chamber, and the first liquid outlet is configured to communicate with the first reaction chamber and a liquid discharge section.

The second liquid outlet is provided at the bottom wall of the second reaction chamber, and the second liquid outlet is configured to communicate with the second reaction chamber and the liquid discharge section.

The third liquid outlet is provided at the bottom wall of the third reaction chamber, and the third liquid outlet is configured to communicate with the third reaction chamber and the liquid discharge section.

### BRIEF DESCRIPTION OF THE DRAWINGS

FIG. 1 is a schematic block diagram of an absorption tower for gas capturing according to an embodiment of the present disclosure.
FIG. 2 is a schematic cross-sectional view of an absorption tower for gas capturing according to an embodiment of the present disclosure in a top view perspective.
FIG. 3 is a schematic cross-sectional view of an absorption tower for gas capturing according to another embodiment of the present disclosure in a top view perspective.

### Reference numerals:

absorption tower body 1; air discharge section 11; air outlet 111; reaction section 12; liquid inlet 121; liquid discharge section 13; liquid discharge port 131; air inlet 132;
first reaction chamber 20; first cylinder 21; second reaction chamber 211; second cylinder 22; third reaction chamber 221;
first conveying assembly 31; first pipeline 311; first pump 312; first heat exchanger 313;
second conveying assembly 32; second pipeline 321; second pump 322; second heat exchanger 323;
first spray member 41; second spray member 42; third spray member 43;
first vent pipe 51; second vent pipe 52; third vent pipe 53.

### DETAILED DESCRIPTION

Embodiments of the present disclosure will be described in detail below, and examples of embodiments are illustrated in the accompanying drawings. Embodiments described below with reference to the accompanying drawings are illustrative and are intended to be used to explain the present disclosure, but cannot be construed to limit the present disclosure.

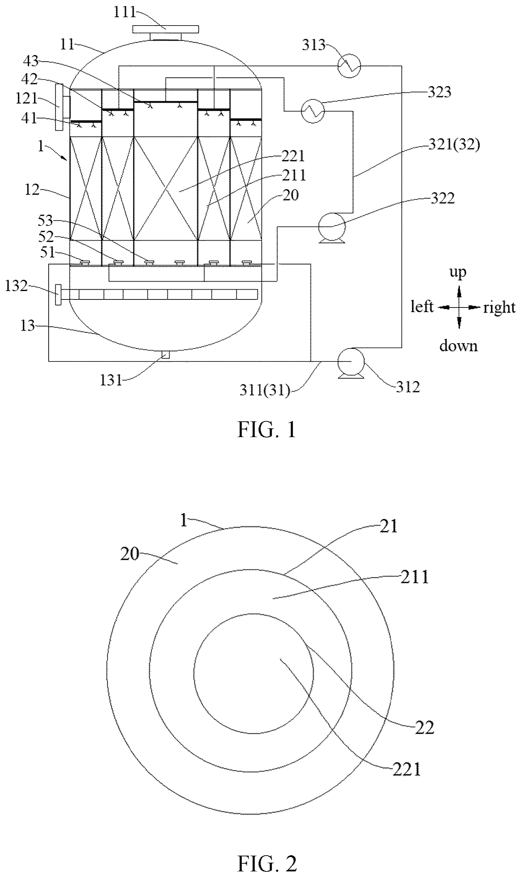

As shown in FIG. 1, an absorption tower for gas capturing according to embodiments of the present disclosure includes: an absorption tower body 1, a first conveying assembly 31 and a second conveying assembly 32.

A compartment is defined in the absorption tower body 1, and an air inlet 132, an air outlet 111, a liquid inlet 121 and a liquid discharge port are provided at the absorption tower body 1. The compartment includes a reaction chamber located at an intermediate position in a height direction of the absorption tower body 1 (such as an up-down direction in FIG. 1), the liquid inlet 121 and the air outlet 111 are located above the reaction chamber, and the air inlet 132 and the liquid discharge port are located below the reaction chamber. In some specific embodiments, as shown in FIG. 1, the absorption tower body 1 is installed with an air discharge section 11, a reaction section 12 and a liquid discharge section 13 sequentially in a top-down direction. The air outlet 111 is provided at the air discharge section 11 for use in discharging a flue gas after a reaction, and the liquid discharge port is provided at the liquid discharge section 13 for use in discharging a reaction liquid after the reaction.

The reaction chamber includes a first reaction chamber 20, a second reaction chamber 211 and a third reaction chamber 221 which are arranged at intervals in a first direction. The first direction (such as a left-right direction in FIG. 1) is orthogonal to the height direction of the absorption tower body 1. The air inlet 132 is communicated with the first reaction chamber 20, the second reaction chamber 211 and the third reaction chamber 221 so that the flue gas is introduced into the first reaction chamber 20, the second reaction chamber 211 and the third reaction chamber 221 respectively. The liquid inlet 121 is communicated with the first reaction chamber 20 so that the reaction liquid is introduced into the first reaction chamber 20. The air outlet 111 and the liquid discharge port are communicated with the third reaction chamber 221.

The first conveying assembly 31 is connected to a lower portion of the first reaction chamber 20, and the first conveying assembly 31 is connected to an upper portion of the second reaction chamber 211, for conveying a reaction liquid after the flue gas and the reaction liquid react in the first reaction chamber 20 to the second reaction chamber 211, to facilitate a reaction of the reaction liquid after the reaction with the flue gas introduced into the second reaction chamber 211.

The second conveying assembly 32 is connected to a lower portion of the second reaction chamber 211, and the second conveying assembly 32 is connected to an upper portion of the third reaction chamber 221, for conveying the reaction liquid after reaction in the second reaction chamber 211 to the third reaction chamber 221, to facilitate a reaction of the reaction liquid after the reaction with the flue gas introduced into the third reaction chamber 221.

In some specific embodiments, as shown in FIG. 1, the first reaction chamber 20, the second reaction chamber 211 and the third reaction chamber 221 are arranged in the left-right direction, thereby avoiding an overall height of the absorption tower being too high, thereby facilitating applications in scenarios such as ships and buildings. The first conveying assembly 31 is connected between the first reaction chamber 20 and the second reaction chamber 211, so that the reaction liquid after reacting with the flue gas in the first reaction chamber 20 may be extracted and introduced into the second reaction chamber 211 by utilizing the first conveying assembly 31, so that a reaction liquid entering the second reaction chamber 211 may react with the flue gas introduced into the second reaction chamber 211 in the second reaction chamber 211. Similarly, the second conveying assembly 32 introduces the reaction liquid after the reaction in the second reaction chamber 211 into the third reaction chamber 221, so that a reaction liquid entering the third reaction chamber 221 reacts with the flue gas introduced into the third reaction chamber 221 in the third reaction chamber 221.

It should be noted that, the following are all examples of capturing carbon dioxide, the reaction liquid is a liquid that may absorb the carbon dioxide, and the flue gas is a gas containing the carbon dioxide. After the flue gas and the reaction liquid are introduced into the first reaction chamber 20, a part of the carbon dioxide in the flue gas may dissolve in the reaction liquid and increase a temperature of the reaction liquid. The first conveying assembly is then utilized to convey the reaction liquid after the reaction in the first reaction chamber 20 to the second reaction chamber 211, so that the reaction liquid reacts with carbon dioxide in a flue gas in the second reaction chamber 211. Finally, the second conveying assembly is utilized to convey the reaction liquid in the second reaction chamber 211 to the third reaction chamber 221, so that the reaction liquid reacts with carbon dioxide in a flue gas in the third reaction chamber 221.

The inventors found that after the reaction liquid in the first reaction chamber 20 reacts, a temperature of the reaction liquid will increase. When the reaction liquid in the first reaction chamber 20 reacts with the flue gas in the second reaction chamber 211 utilizing the first conveying assembly, an absorption rate of the carbon dioxide will be affected.

Therefore, in some embodiments, the first conveying assembly 31 further includes a first pipeline 311, a first pump 312 and a first heat exchanger 313. A first end of the first pipeline 311 is connected to the first reaction chamber 20, a second end of the first pipeline 311 is connected to the second reaction chamber 211, the first pump 312 is provided on the first pipeline 311, and the first heat exchanger 313 is provided between the first pump 312 and the second end of the first pipeline 311.

The second conveying assembly 32 further includes a second pipeline 321, a second pump 322 and a second heat exchanger 323. A first end of the second pipeline 321 is connected to the second reaction chamber 211, a second end of the second pipeline 321 is connected to the third reaction chamber 221, the second pump 322 is provided on the second pipeline 321, and the second heat exchanger 323 is provided between the second pump 322 and the second end of the second pipeline 321.

That is, the first heat exchanger 313 and the second heat exchanger 323 may respectively change a temperature of a reaction liquid in the first pipeline 311 and a temperature of a reaction liquid in the second pipeline 321, thereby increasing an absorption rate of the carbon dioxide by the reaction liquid, which is beneficial to the capture of the carbon dioxide in the flue gas.

In other words, the first reaction chamber 20, the second reaction chamber 211 and the third reaction chamber 221 in the absorption tower for gas capturing of embodiments of the present disclosure are arranged sequentially in the first direction, avoiding the overall height of the absorption tower being too high caused by a stacked installation, thereby facilitating a construction and use on the ships and in the buildings, and having a wide range of applications.

In addition, the first conveying assembly 31 and the second conveying assembly 32 may also be utilized to change the temperature of the reaction liquid when conveying the reaction liquid, so that the reaction liquid has a certain absorption rate of the carbon dioxide to better capture the carbon dioxide in the flue gas.

Therefore, the absorption tower for gas capturing of embodiments of the present disclosure has advantages of a wide application range and a good capture effect.

Of course, the absorption tower for gas capturing of embodiments of the present disclosure may also be applied to capture other gases such as sulfur dioxide.

In some embodiments, the absorption tower for gas capturing of embodiments of the present disclosure further includes a first cylinder 21 and a second cylinder 22. The first cylinder 21 is provided in the compartment, and the first reaction chamber 20 is formed between a peripheral wall of the first cylinder 21 and a peripheral wall of the absorption tower body 1. The second cylinder 22 is provided in a cavity of the first cylinder 21, the second reaction chamber 211 is formed between a peripheral wall of the second cylinder 22 and the peripheral wall of the first cylinder 21, and the third reaction chamber 221 is formed by a cavity of the second cylinder 22.

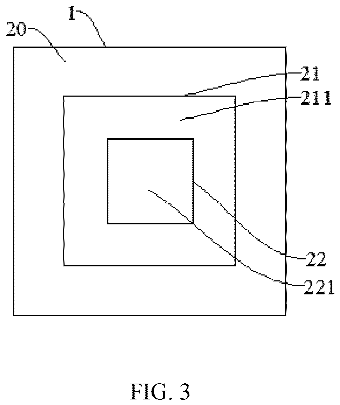

It may be understood that, as shown in FIG. 2 and FIG. 3, the second reaction chamber 211 is installed around the third reaction chamber 221, and the first reaction chamber 20 is installed around the second reaction chamber 211. Therefore, it may better ensure that temperatures in the first reaction chamber 20, the second reaction chamber 211 and the third reaction chamber 221 are even during uses, which may effectively prevent the temperatures in the reaction chambers from being uneven and affecting the reaction effect caused by the influence of the external environment during the uses.

In some embodiments, projected contours of the first cylinder 21, the second cylinder 22 and the absorption tower body 1 in a plane orthogonal to the height direction of the absorption tower body 1 are similar, and the projected contours of the first cylinder 21, the second cylinder 22 and the absorption tower body 1 in the plane orthogonal to the height direction of the absorption tower body 1 are circular or regular polygonal.

It may be understood that, as shown in FIG. 2 and FIG. 3, in a top view perspective, edge contours of the first cylinder 21, the second cylinder 22 and the absorption tower body 1 may be circular or regular polygonal. That is to say, the absorption tower in embodiments of the present disclosure may be designed into different shapes, such as round or rectangular, according to different usage scenarios, which is beneficial to a better application in different environments.

In some embodiments, a projected area of the first reaction chamber 20 in the plane orthogonal to the height direction of the absorption tower body 1 is smaller than a projected area of the second reaction chamber 211 in the plane orthogonal to the height direction of the absorption tower body 1, and the projected area of the second reaction chamber 211 in the plane orthogonal to the height direction of the absorption tower body 1 is smaller than a projected area of the third reaction chamber 221 in the plane orthogonal to the height direction of the absorption tower body 1.

It may be understood that, after reacting with the flue gas, the reaction liquid in the first reaction chamber 20 is introduced into the second reaction chamber 211 to continue reacting with the flue gas in the second reaction chamber 211, then a reaction effect in the second reaction chamber 211 is weaker than a reaction effect in the first reaction chamber 20 (that is, an absorption efficiency of the reaction liquid for the carbon dioxide in the second reaction chamber is lower than that in the first reaction chamber), and a reaction effect in the third reaction chamber 221 is weaker than the reaction effect in the second reaction chamber 211. Therefore, a space of reaction sites may be increased to increase a reaction duration. Therefore, a volume of the second reaction chamber 211 is installed to be larger than a volume of the first reaction chamber 20, and a volume of the third reaction chamber 221 is installed to be larger than the volume of the second reaction chamber 211.

In some embodiments, each of the first reaction chamber 20 and the second reaction chamber 211 is communicated with each of the air outlet 111 and the liquid discharge port.

It may be understood that, the first reaction chamber 20 is communicated with the air outlet 111 and the liquid discharge port, and the second reaction chamber 211 is communicated with the air outlet 111 and the liquid discharge port.

That is to say, since reaction efficiencies of the reaction liquid in the second reaction chamber 211 and the third reaction chamber 221 are lower than that in the first reaction chamber 20, when the carbon dioxide is continuously captured, more and more reaction liquids will be caused in the first reaction chamber 20 and the second reaction chamber 211. Therefore, the liquid discharge ports may be utilized to discharge excess reaction liquids. Similarly, the air outlets 111 may be utilized to discharge gases in the first reaction chamber 20, the second reaction chamber 211 and the third reaction chamber 221.

In some embodiments, the absorption tower for gas capturing of embodiments of the present disclosure further includes a first spray member 41, a second spray member 42 and a third spray member 43. The first spray member 41 is provided in the first reaction chamber 20 and connected to a top wall of the first reaction chamber 20. The first spray member 41 is communicated with the liquid inlet 121. The second spray member 42 is provided in the second reaction chamber 211 and connected to a top wall of the second reaction chamber 211. The second spray member 42 is communicated with the second end of the first pipeline 311. The third spray member 43 is provided in the third reaction chamber 221 and connected to a top wall of the third reaction chamber 221. The third spray member 43 is communicated with the second end of the second pipeline 321.

In some specific embodiments, as shown in FIG. 1, the first spray member 41 is provided at a top of the first reaction chamber 20, and the reaction liquid through the first spray member 41 may react more fully with the flue gas, thereby improving the capture effect. Similarly, the second spray member 42 and the third spray member 43 may respectively improve capture efficiencies in the second reaction chamber 211 and the third reaction chamber 221.

In some embodiments, a plurality of first spray members 41, a plurality of second spray members 42 and a plurality of third spray members 43 are provided. The plurality of first spray members 41 are arranged at intervals along a circumference of the first reaction chamber 20, the plurality of second spray members 42 are arranged at intervals along a circumference of the second reaction chamber 211, and the plurality of third spray members 43 are arranged at intervals along a circumference of the third reaction chamber 221.

In some embodiments, the absorption tower for gas capturing of embodiments of the present disclosure further includes a first liquid outlet, a second liquid outlet and a third liquid outlet. The first liquid outlet is provided at a bottom wall of the first reaction chamber 20, and the first liquid outlet is configured to communicate with the first reaction chamber 20 and a liquid discharge section 13. The second liquid outlet is provided at a bottom wall of the second reaction chamber 211, and the second liquid outlet is configured to communicate with the second reaction chamber 211 and the liquid discharge section 13. The third liquid outlet is provided at a bottom wall of the third reaction chamber 221, and the third liquid outlet is configured to communicate with the third reaction chamber 221 and the liquid discharge section 13.

It may be understood that, the bottom wall of the first reaction chamber 20 is provided with the first liquid outlet, and the first liquid outlet is communicated with the liquid discharge port, so that the excess reaction liquid in the first reaction chamber 20 may be discharged through the first liquid outlet and the liquid discharge port sequentially. Similarly, the excess reaction liquid in the second reaction chamber 211 may be discharged through the second liquid outlet and the liquid discharge port sequentially, and the reaction liquid in the third reaction chamber 221 may be discharged through the third liquid outlet and the liquid discharge port sequentially.

In some embodiments, a plurality of first liquid outlets, a plurality of second liquid outlets and a plurality of third liquid outlets are provided, the plurality of first liquid outlets are arranged at intervals along the circumference of the first reaction chamber 20, the plurality of second liquid outlets are arranged at intervals along the circumference of the second reaction chamber 211, and the plurality of third liquid outlets are arranged at intervals along the circumference of the third reaction chamber 221.

In some embodiments, the absorption tower for gas capturing of embodiments of the present disclosure further includes a first vent pipe 51, a second vent pipe 52 and a third vent pipe 53. A first end of the first vent pipe 51 is provided on the bottom wall of the first reaction chamber 20 and is communicated with the air inlet 132, and a second end of the first vent pipe 51 extends in a direction away from the bottom wall of the first reaction chamber 20. A first end of the second vent pipe 52 is provided on the bottom wall of the second reaction chamber 211 and is communicated with the air inlet 132, and a second end of the second vent pipe 52 extends in a direction away from the bottom wall of the second reaction chamber 211. A first end of the third vent pipe 53 is provided on the bottom wall of the third reaction chamber 221 and is communicated with the air inlet 132, and a second end of the third vent pipe 53 extends in a direction away from the bottom wall of the third reaction chamber 221.

In some specific embodiments, as shown in FIG. 1, a lower end of the first vent pipe 51 is connected to the bottom wall of the first reaction chamber 20 and is communicated with the air inlet 132, and an upper end of the first vent pipe 51 is located in the first reaction chamber 20. The upper end of the first vent pipe 51 is higher than the bottom wall of the first reaction chamber 20 to avoid the flue gas in the first reaction chamber 20 from leaking out from the first liquid outlet when the first liquid outlet is utilized to discharge the liquid. Similarly, the second vent pipe 52 may avoid the flue gas in the second reaction chamber 211 from leaking out from the second liquid outlet when the second liquid outlet is utilized to discharge the liquid, and the third vent pipe 53 may avoid the flue gas in the third reaction chamber 221 from leaking out from the third liquid outlet when the third liquid outlet is utilized to discharge the liquid.

It may be understood that, the first reaction chamber 20 between an upper end port of the first vent pipe 51 and the bottom wall of the first reaction chamber 20 forms a first liquid collector to collect the liquid in the first reaction chamber 20. Similarly, the second reaction chamber 211 between an upper end port of the second vent pipe 52 and the bottom wall of the second reaction chamber 21 forms a second liquid collector to collect the liquid in the second reaction chamber 211, and the third reaction chamber 211 between an upper end port of the third vent pipe 53 and the bottom wall of the third reaction chamber 221 forms a third liquid collector to collect the liquid in the third reaction chamber 221.

In some embodiments, a plurality of first vent pipes 51, a plurality of second vent pipes 52 and a plurality of third vent pipes 53 are provided, the plurality of first vent pipes 51 are arranged at intervals along the circumference of the first reaction chamber 20, the plurality of second vent pipes 52 are arranged at intervals along the circumference of the second reaction chamber 211, and the plurality of third vent pipes 53 are arranged at intervals along the circumference of the third reaction chamber 221.

In the description of the present disclosure, it is necessary to understand that terms such as "height", "upper", "lower", "top", "bottom", "inner", "outer", and "circumferential", indicating the orientation or positional relationship are based on the orientation or positional relationship shown in the accompanying drawings, and are only for convenience of describing the present disclosure and simplifying the description, rather than indicating or implying that the device or element referred to must have a particular orientation, be constructed and operated in a particular orientation, and therefore cannot be understood as a limitation on the present disclosure.

In addition, terms such as "first" and "second" are used herein for purposes of description only and should not be understood as indicating or implying relative importance or implicitly indicating the number of indicated technical features. Thus, the feature limited with "first" and "second" may explicitly or implicitly include at least one of the features. In the description of the present disclosure, "a plurality of" means at least two, for example, two, three, etc., unless otherwise clearly and specifically limited.

In the present disclosure, unless otherwise clearly specified and limited, the terms such as "mounted", "connected", "coupled", "fixed" and the like should be understood in a broad sense, and may be, for example, a fixed connection, a detachable connection, or an integral connection; may also be a mechanical connection, an electrical connection, or communicative with each other; may also be a direct connection or an indirect connection via an intermediate medium; may also be an internal connection of two elements or an interaction relationship between two elements, unless otherwise clearly limited. For those skilled in the art, specific meanings of the above terms in the present disclosure may be understood according to specific circumstances.

In the present disclosure, unless otherwise clearly specified and limited, a first feature being "on" or "below" a second feature may mean that the first feature is in direct contact with the second feature, or that the first and second features are in indirect contact via an intermediate medium. Furthermore, a first feature "on", "above" and "on top of" a second feature may mean that the first feature is right above or obliquely above the second feature, or simply means that the first feature is at a higher horizontal height than the second feature. A first feature being "below", "under" and "on bottom of" a second feature may mean that the first feature is right below or obliquely below the second feature, or simply means that the first feature is at a smaller horizontal height than the second feature.

In the present disclosure, terms such as "one embodiment", "some embodiments", "an example", "a specific example", or "some examples" mean that a specific feature, structure, material or characteristic described in connection with the embodiment or example is included in at least one embodiment or example of the present disclosure. In the present specification, schematic expressions of the above terms do not necessarily refer to the same embodiment or example. Furthermore, the specific features, structures, materials, or characteristics described may be combined in any suitable manner in any one or more embodiments or examples. In addition, those skilled in the art may combine and associate different embodiments or examples and features of different embodiments or examples described in the present specification without mutually inconsistent.

Although the above embodiments have been shown and described, it is to be understood that the above embodiments are illustrative and are not to be construed as limitations on the present disclosure, and changes, modifications, alternatives and variations of the above embodiments by those ordinary skilled in the art are all within the scope of protection of the present disclosure.

## Claims

1. An absorption tower for gas capturing, comprising:
an absorption tower body, wherein a compartment is defined in the absorption tower body, an air inlet, an air outlet, a liquid inlet and a liquid discharge port are provided at the absorption tower body, the compartment comprises a reaction chamber located at an intermediate position in a height direction of the absorption tower body, the liquid inlet and the air outlet are located above the reaction chamber, and the air inlet and the liquid discharge port are located below the reaction chamber,
wherein the reaction chamber comprises a first reaction chamber, a second reaction chamber and a third reaction chamber which are arranged at intervals in a first direction, the first direction is orthogonal to the height direction of the absorption tower body, the air inlet is communicated with the first reaction chamber, the second reaction chamber and the third reaction chamber so that a flue gas is introduced into the first reaction chamber, the second reaction chamber and the third reaction chamber respectively, the liquid inlet is communicated with the first reaction chamber so that a reaction liquid is introduced into the first reaction chamber, the air outlet and the liquid discharge port are communicated with the third reaction chamber;
a first conveying assembly connected to a lower portion of the first reaction chamber, and connected to an upper portion of the second reaction chamber, for conveying a reaction liquid after the flue gas and the reaction liquid react in the first reaction chamber to the second reaction chamber, to facilitate a reaction of the reaction liquid after the reaction with the flue gas introduced into the second reaction chamber; and
a second conveying assembly connected to a lower portion of the second reaction chamber, and connected to an upper portion of the third reaction chamber, for conveying the reaction liquid after the reaction in the second reaction chamber to the third reaction chamber, to facilitate a reaction of the reaction liquid after the reaction with the flue gas introduced into the third reaction chamber;
a first cylinder and a second cylinder, wherein the first cylinder is provided in the compartment, and the first reaction chamber is formed between a peripheral wall of the first cylinder and a peripheral wall of the absorption tower body,
wherein the second cylinder is provided in a cavity of the first cylinder, the second reaction chamber is formed between a peripheral wall of the second cylinder and the peripheral wall of the first cylinder, and the third reaction chamber is formed by a cavity of the second cylinder.

2. The absorption tower for gas capturing according to claim 1, wherein projected contours of the first cylinder, the second cylinder and the absorption tower body in a plane orthogonal to the height direction of the absorption tower body are similar, and the projected contours of the first cylinder, the second cylinder and the absorption tower body in the plane orthogonal to the height direction of the absorption tower body are circular or regular polygonal.

3. The absorption tower for gas capturing according to claim 1 or 2, wherein a projected area of the first reaction chamber in the plane orthogonal to the height direction of the absorption tower body is smaller than a projected area of the second reaction chamber in the plane orthogonal to the height direction of the absorption tower body,
the projected area of the second reaction chamber in the plane orthogonal to the height direction of the absorption tower body is smaller than a projected area of the third reaction chamber in the plane orthogonal to the height direction of the absorption tower body.

4. The absorption tower for gas capturing according to any one of claims 1 to 3, wherein each of the first reaction chamber and the second reaction chamber is communicated with each of the air outlet and the liquid discharge port.

5. The absorption tower for gas capturing according to any one of claims 1 to 4, wherein the first conveying assembly further comprises a first pipeline, a first pump and a first heat exchanger, a first end of the first pipeline is connected to the first reaction chamber, a second end of the first pipeline is connected to the second reaction chamber, the first pump is provided on the first pipeline, and the first heat exchanger is provided between the first pump and the second end of the first pipeline;
the second conveying assembly further comprises a second pipeline, a second pump and a second heat exchanger, a first end of the second pipeline is connected to the second reaction chamber, a second end of the second pipeline is connected to the third reaction chamber, the second pump is provided on the second pipeline, and the second heat exchanger is provided between the second pump and the second end of the second pipeline.

6. The absorption tower for gas capturing according to claim 5, further comprising a first spray member, a second spray member and a third spray member, wherein the first spray member is provided in the first reaction chamber and connected to a top wall of the first reaction chamber, and the first spray member is communicated with the liquid inlet;
the second spray member is provided in the second reaction chamber and connected to a top wall of the second reaction chamber, and the second spray member is communicated with the second end of the first pipeline;
the third spray member is provided in the third reaction chamber and connected to a top wall of the third reaction chamber, and the third spray member is communicated with the second end of the second pipeline.

7. The absorption tower for gas capturing according to claim 6, wherein a plurality of first spray members, a plurality of second spray members and a plurality of third spray members are provided, the plurality of first spray members are arranged at intervals along a circumference of the first reaction chamber, the plurality of second spray members are arranged at intervals along a circumference of the second reaction chamber, and the plurality of third spray members are arranged at intervals along a circumference of the third reaction chamber.

8. The absorption tower for gas capturing according to any one of claims 1 to 7, further comprising a first vent pipe, a second vent pipe and a third vent pipe, wherein a first end of the first vent pipe is provided on a bottom wall of the first reaction chamber and is communicated with the air inlet, and a second end of the first vent pipe extends in a direction away from the bottom wall of the first reaction chamber;
a first end of the second vent pipe is provided on a bottom wall of the second reaction chamber and is communicated with the air inlet, and a second end of the second vent pipe extends in a direction away from the bottom wall of the second reaction chamber;
a first end of the third vent pipe is provided on a bottom wall of the third reaction chamber and is communicated with the air inlet, and a second end of the third vent pipe extends in a direction away from the bottom wall of the third reaction chamber.

9. The absorption tower for gas capturing according to any one of claims 1 to 8, further comprising a first liquid outlet, a second liquid outlet and a third liquid outlet, wherein the first liquid outlet is provided at the bottom wall of the first reaction chamber, and the first liquid outlet is configured to communicate with the first reaction chamber and a liquid discharge section;
the second liquid outlet is provided at the bottom wall of the second reaction chamber, and the second liquid outlet is configured to communicate with the second reaction chamber and the liquid discharge section;
the third liquid outlet is provided at the bottom wall of the third reaction chamber, and the third liquid outlet is configured to communicate with the third reaction chamber and the liquid discharge section.
